Europäisches Patentamt

European Patent Office

Office européen des brevets

(19)

(11) Veröffentlichungsnummer: **0 218 963**
**B 1**

(12) **EUROPÄISCHE PATENTSCHRIFT**

(45) Veröffentlichungstag der Patentschrift:
**19.04.89**

(51) Int. Cl.⁴: **A47B 37/00**, H04N 7/18

(21) Anmeldenummer: **86113178.7**

(22) Anmeldetag: **25.09.86**

(54) **Konferenztisch.**

(30) Priorität: **09.10.85 DE 3536044**

(43) Veröffentlichungstag der Anmeldung:
**22.04.87 Patentblatt 87/17**

(45) Bekanntmachung des Hinweises auf die Patenterteilung:
**19.04.89 Patentblatt 89/16**

(84) Benannte Vertragsstaaten:
**AT BE CH DE FR GB IT LI NL**

(56) Entgegenhaltungen:
**DE-A- 3 317 414**
**DE-B- 2 623 573**
**US-A- 4 400 724**

**FRIEDRICH OHMANN "Kommunikations-Endgeräte",**
**Grundlagen, Verfahren, Bausteine, Geräte, Systeme,**
**SPRINGER VERLAG Berlin, Heidelberg, New York,**
**Tokio 1983, Seiten 414-423**

(73) Patentinhaber: **Weyel KG, Rodenbacher Strasse**
**Postfach 68, D-6342 Haiger/Hessen(DE)**

(72) Erfinder: **Engel, Hartmut S., Schloss Heutingsheim,**
**D-7141 Freiberg a/N(DE)**
Erfinder: **Weyel, Karl Hermann, Ringstrasse 20,**
**D-6342 Haiger(DE)**
Erfinder: **Weyel, Hans Dieter, Hickenweg 31,**
**D-6342 Haiger(DE)**

(74) Vertreter: **Patentanwälte Dipl.-Ing. R. Schlee Dipl.-Ing.**
**A. Missling, Bismarckstrasse 43, D-6300 Giessen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Konferenztisch gemäß dem Oberbegriff von Anspruch 1.

Konferenztische sind typischerweise so gestaltet, daß Konferenzteilnehmer einander gegenübersitzen. Eine solche Sitzordnung ist günstig für die Kommunikation, da sich die Gesprächspartner gegenseitig sehen können, so daß auch Mimik und Gestik zur Geltung gebracht werden können. Bei Konferenzen spielen zunehmend audiovisuelle Geräte eine wichtige Rolle, mit denen Informationen durch Bild und Ton vermittelt werden können, und zwar auch zwischen Teilnehmern, die sich an verschiedenen Orten befinden.

Bekannt ist ein Medienwagen (Prospekt AVE 4421.1, Ausgabe 1/84 der Firma Weyel), in dem ein Monitor und ein Videorekorder räumlich vorteilhaft untergebracht sind. Im Medienwagen sind die zwischen diesen Geräten verlaufenden Kabel verlegt. Man kann damit während einer Konferenz Informationen mit bewegten Bildern vermitteln, doch ist hierzu außer dem Konferenztisch und den zugehörigen Sitzgelegenheiten eben noch ein Möbel erforderlich, nämlich der Medienwagen. Er benötigt Platz und Kabelanschlüsse. Das Design des Medienwagens paßt nicht immer zum sonstigen Mobiliar, was insbesondere in repräsentativen Konferenzräumen nicht erwünscht ist. Eine Projektionswand kann an einem Medienwagen nicht verwendet werden, so daß z.B. Overhead-Projektoren auf eine Wand projizieren müssen, die dann von allen Konferenzteilnehmern zu betrachten ist.

Bekannt ist ferner eine audio-visuelle Medienwand (Prospekt AVE 4430, Ausgabe 1/84 der Firma Weyel), die sowohl Monitoren und Videorecorder als auch Projektionsflächen aufweist. Auf letztere können vorder- oder rückseitig Bilder projiziert werden. Die Wand ist fest installiert, so daß bei Vorführungen alle Konferenzteilnehmer dorthin blicken müssen. Für kleinere Gruppen ist ein Raum mit einer solchen Wand nicht gut geeignet.

Weiter wurden Video-Konferenzräume vorgeschlagen (Prospekt AVE 3001 der Firma Weyel, DE-OS 3 317 414), die an einer fest installierten Wand Bildschirmgeräte haben, auf denen andernorts befindliche Konferenzteilnehmer sichtbar sind. Vor der Wand steht ein Konferenztisch, der nur an einer Seite Arbeitsplätze für Konferenzteilnehmer aufweist. Diese sitzen im Blickfeld von Fernsehkameras; deren Bilder sind für räumlich getrennte Konferenzteilnehmer auf Bildschirmgeräten sichtbar. Die anwesenden Teilnehmer müssen dazu während einer Video-Konferenz ständig zu der Wand hinsehen. Konferenzräume dieser Art eignen sich nur für Video-Konferenzen, nicht aber für normale Konferenzen, bei denen sich alle Teilnehmer am gleichen Ort befinden. Der Video-Konferenzraum kann deshalb im allgemeinen nur wenig ausgelastet werden.

Bekannt ist auch ein Konferenztisch der eingangs genannten Art (DE-OS 3 403 345, Fig. 1), bei dem rechteckige und viertelkreisringförmige Tischelemente sowie Ansetzeinheiten zu einem C-förmigen Gesamttisch zusammengefügt sind.

Die Ansetzeinheiten enthalten technische Einrichtungen, nämlich ein Mikrofon, einen Lautsprecher und Leuchten. Visuelle Hilfsmittel sind nicht vorgesehen.

Ein Konferenztisch der eingangs genannten Art ist in der US-A 4 400 724 beschrieben. Das System sieht mindestens zwei einander gegenüberliegende Tischelemente vor, die durch einen Zwischenraum getrennt sind, wobei jedes Tischelement eine den Zwischenraum begrenzende Innenseite und eine ihr gegenüberliegende Außenseite aufweist, an der sich mindestens ein Arbeitsplatz für einen Konferenzteilnehmer mit einem unterhalb der Tischebene angeordneten Bildschirmgerät befindet. Die Konferenzteilnehmer können sich entweder unmittelbar gegenübersitzen oder über Videoanlagen sehen und sprechen. Dazu hat jeder Platz in entsprechender Anzahl Videokameras, Bildschirme und Lautsprecher, ferner eine etwas versenkt angeordnete Sichtfläche und eine diese aufnehmende Overhead-Videokamera, die mit einer Bildspeichereinrichtung zusammenwirken kann. Das System ist so angelegt, daß jeder Teilnehmer jeden anderen direkt oder durch Fernübertragung in derjenigen Richtung bzw. Anordnung sehen kann, welche der körperlichen Anwesenheit im Konferenzraum entspricht bzw. entsprechen würde. Der Bildschirm eines in Bezug auf die Mitte des Konferenzraums nach außen gerichteten Arbeitsplatzgerätes liegt nahe der Tischplatte im Winkel zu dieser und soll von dem davor sitzenden Konferenzteilnehmer betrachtet werden können; direkte Sicht durch andere ist aber nicht möglich, ohne daß die Sicht auf die Bildschirminformation unterbrochen wird oder verloren geht. Dadurch wird die Aufmerksamkeit jedes einzelnen Teilnehmers abgelenkt und der Konferenzverlauf insgesamt beeinträchtigt.

Der Erfindung liegt die Aufgabe zugrunde, einen Konferenztisch so auszubilden, daß bei Bedarf auch gegenseitig audiovisuelle Informationen mühelos übermittelt und aufgenommen werden können.

Der zur Lösung dieser Aufgabe gemäß dem kennzeichnenden Teil von Anspruch 1 geschaffene Konferenztisch ist so gestaltet, daß sich das Bildschirmgerät an der Innenseite des Tischelementes befindet und sein Bildschirm im Blickbereich desjenigen Konferenzteilnehmers liegt, der seinen Arbeitsplatz am gegenüberliegenden Tischelement hat.

Ein so ausgebildeter Konferenztisch kann für übliche Konferenzen benutzt werden, und zwar auch dann, wenn keine audio-visuellen Informationen aufgenommen werden sollen. Dies ist möglich, weil die Bildschirmgeräte ständig unterhalb der Tischplatte liegen. Im Bedarfsfall hingegen können audiovisuelle Informationen in die Diskussion eingebracht werden.

Bei einer bevorzugten Ausführungsform der Erfindung (Anspruch 2) ist an der Innenseite jedes Tischelementes mindestens ein Bildschirmgerät angeordnet, so daß von jedem Arbeitsplatz aus ein Bildschirmgerät sichtbar ist. Eventuell ausgenommen kann ein Steuer-Tischelement sein. Der diesem Tischelement gegenübersitzende Konferenzteilnehmer kann dann Bilder an den Bildschirmgeräten betrachten, die sich an den Tischelementen befinden, die seitlich vom Steuer-Tischelement angeordnet sind. Die Unterbringung eines Bildschirmgerätes an einem Steuer-Tischelement kann unter Umständen daran scheitern, daß der Raum unterhalb der Tischplatte von anderen Geräten eingenommen wird.

Besonders zweckmäßig ist eine ringförmige Ausbildung des Konferenztisches, wie im Anspruch 3 angegeben. Ein solcher ringförmiger Tisch läßt sich besonders vorteilhaft aus acht trapezförmigen Tischelementen bilden, die zusammen ein regelmäßiges Achteck bilden. An einem solchen Tisch können bis zu sechzehn Konferenzteilnehmer Platz finden, was für die meisten Fälle ausreichend ist. Ein achteckiger Tisch läßt sich zwanglos mit einer solchen Größe herstellen, daß die Bildschirmgeräte einen günstigen Abstand von den Sitzplätzen der Konferenzteilnehmer aufweisen, die sich an den gegenüberliegenden Tischelementen befinden.

Es können auch vier Tischelemente gemäß Anspruch 5 vorgesehen werden. Um einen geschlossenen Ring auch bei vier Tischelementen zu erhalten, können gemäß Anspruch 6 Füllelemente vorgesehen werden. Eine zweckmäßige Größe ist im Anspruch 7 angegeben, gemäß dem an jedem Tischelement drei Arbeitsplätze für Konferenzteilnehmer angeordnet sind. Im Falle einer Video-Konferenz könnten dann am Konferenztisch sechs Personen Platz finden, die unmittelbar an der Video-Konferenz teilnehmen, und zwar vorzugsweise an rechtwinklig zueinander stehenden Tischelementen (Anspruch 8). An den anderen Tischelementen können weitere Konferenzteilnehmer Platz finden, die dann allerdings an dem anderen Ort nicht sichtbar sind, also nur mittelbar an der Video-Konferenz teilnehmen.

Es sind weitere Ausführungsformen für die Tischgestaltung möglich. Im einfachsten Fall besteht der Tisch aus zwei separaten Tischelementen, die einander gegenüberstehen. Möglich ist auch eine U-förmige Tischausbildung, wobei die Tischelemente durch die U-Schenkel gebildet werden.

Im Anspruch 9 sind vorteilhafte Abstände zwischen Bildschirmgerät und Tischelement-Außenseite eines gegenüberliegenden Tischelementes angegeben. Als generelle Regel gilt, daß der Abstand umso größer sein kann, je größer die Bildschirmgeräte sind. Da jedoch die Bildschirmgeräte die Tischplatte nicht überragen sollen, ist die Bildschirmgröße begrenzt.

Wie schon weiter oben erwähnt, sind zwei Arbeitsplätze pro Tischelement besonders dann zweckmäßig, wenn der Tisch achteckig ist (Anspruch 10). In diesem Fall empfehlen sich Tischelementabmessungen gemäß Anspruch 11.

Vorteilhafterweise liegen die Bildschirmgeräte mindestens teilweise unterhalb der Tischplatte des zugeordneten Tischelementes (Anspruch 12). Die Tischplatten der Tischelemente lassen sich ohne weiteres so breit ausbilden, daß auch bei dieser Unterbringung der Bildschirmgeräte noch genügend Beinfreiheit für Konferenzteilnehmer besteht. Vorteilhafterweise ist jedes Bildschirmgerät von einer Zarge umgeben (Anspruch 13), was auch optische Vorteile bringt, da Spiegelungserscheinungen vorgebeugt wird.

Die Neigungslage der Bildschirme der Bildschirmgeräte ist vorzugsweise einstellbar (Anspruch 14). Dies ermöglicht eine optimale Orientierung der Geräte und damit eine optimale Aufnahme von Informationen.

Vorzugsweise sind die Bildschirmgeräte Elektronenstrahl-Bildschirmgeräte (Anspruch 15). Elektronenstrahl-Bildschirmgeräte sind beim heutigen Stand der technischen Entwicklung z.B. für Video-Konferenzen nötig. Denkbar ist jedoch auch die Verwendung von Bildschirmgeräten, auf die von der Rückseite her Bilder optisch projiziert werden. In Betracht kommen auch Bildschirmgeräte, deren Bildpunkte mit Hilfe von Lichtleitern auf den Schirm projiziert werden.

Gemäß einer vorteilhaften Ausgestaltung der Erfindung (Anspruch 16) ist mindestens eine Lesekamera vorgesehen, die auf die Tischfläche eines Tischelementes gerichtet ist. Dadurch können Vorlagen, auf die die Lesekamera gerichtet ist, auf die Bildschirmgeräte übertragen werden. Für eine optimale Einstellung der Lesekamera ist diese vorzugsweise an einem heb- und senkbaren Stativ gehalten (Anspruch 17). Die Bewegung des Statives kann mittels Elektromotors bewirkt werden. Die Lesekamera ist vorzugsweise auch schwenkbar (Anspruch 18).

Vorzugsweise sind alle Installationen für den Betrieb der diversen Geräte im Konferenztisch untergebracht (Anspruch 19). Dies hat den Vorteil, daß offen liegende Kabel nicht vorhanden sind und "Kabelsalat" vermieden wird. Am Konferenztisch kann sich auch ein Steuerpult befinden (Anspruch 20), wodurch eine Steuerung aller Funktionen durch Konferenzteilnehmer selber möglich ist.

Der Konferenztisch ist vorzugsweise auch mit einem Bildabtaster zur Übertragung von Bildern auf die Bildschirmgeräte ausgerüstet (Anspruch 21). Dadurch können die Bildschirmgeräte auch zur Darstellung von Bildern benutzt werden, die nicht elektronisch gespeichert sind, sondern z.B. nur in Form von Diapositiven oder dergleichen verfügbar sind.

Vorzugsweise ist eine Steuereinrichtung mit einem Verteiler vorgesehen, an dessen Eingangsseite diverse Geräte angeschlossen sind und an dessen Ausgangsseite die Bildschirmgeräte angeschlossen sind (Anspruch 22). Hierbei können die Bildschirmgeräte in zwei Gruppen aufgeteilt sein (Anspruch 23). Besonders zweckmäßig ist, wenn gemäß Anspruch 24 der Verteiler und die daran angeschlossenen Geräte im Tisch selber untergebracht sind, vorzugsweise in einem Steuer-Tischelement, an dem sich auch das Steuerpult befindet.

Die in den Ansprüchen 25 bis 30 angegebenen Weiterbildungen der Erfindung machen den Konferenztisch insbesondere auch geeignet für Video-Konferenzen, also für Konferenzen, bei denen z.B. zwei Gruppen aus Konferenzteilnehmern weit voneinander entfernt sind.

Gemäß Anspruch 25 ist mindestens eine Fernsehkamera vorgesehen, die auf den bzw. die Konferenzteilnehmer gerichtet ist bzw. sind. Dadurch ist es möglich geworden, einen Konferenzraum, der zu üblichen Konferenzen benutzt wird, auch für Video-Konferenzen zu verwenden. Dies ermöglicht eine wesentlich bessere Ausnutzung des Konferenzraumes, als dies für einen Video-Konferenzraum der Fall ist, der doch nur gelegentlich benutzt würde. Die Fernsehkamera muß aus Gründen des Blickwinkels relativ hoch angeordnet werden und ist deshalb vorzugsweise von der Tischplatte abnehmbar oder unter diese versenkbar (Anspruch 26).

Vorzugsweise ist auch ein Kontrollmonitor vorgesehen (Anspruch 27). Dadurch wird der Konferenztisch für die Benutzung bei Video-Konferenzen optimiert. Die nahe Anordnung des Kontrollmonitors beim Konferenzteilnehmer gemäß Anspruch 28 ist besonders vorteilhaft und ermöglicht es insbesondere, den Kontrollmonitor klein auszubilden. Bei naher Anordnung des Kontrollmonitors beim Konferenzteilnehmer ist eine Lage des Bildschirmes gemäß Anspruch 29 besonders vorteilhaft. Der Kontrollmonitor ist vorzugsweise in die Tischplatte eingelassen (Anspruch 30), wodurch der Vorteil gewonnen wird, daß das Blickfeld der Konferenzteilnehmer durch die Kontrollmonitore nicht verbaut wird.

In der Zeichnung sind Ausführungsbeispiele der Erfindung dargestellt. Es zeigen:

Fig. 1 eine Draufsicht auf einen ringförmigen Konferenztisch,

Fig. 2 eine Rückansicht eines Tischelementes des Konferenztisches nach Fig. 1,

Fig. 3 einen vertikalen Schnitt durch den Konferenztisch nach Linie III–III in Fig. 1, wobei jedoch die im Hintergrund stehenden Tischelemente der Übersichtlichkeit wegen nicht dargestellt sind,

Fig. 4 eine Seitenansicht eines Tischelementes, wie es bei dem Konferenztisch nach Fig. 1 verwendet ist,

Fig. 5 eine Seitenansicht eines abgewandelten Tischelementes,

Fig. 6 eine Seitenansicht eines Tischelementes, in das ein Kontrollmonitor eingebaut ist,

Fig. 7 eine Draufsicht auf einen Konferenztisch in Form eines regelmäßigen Achteckes,

Fig. 8 eine der Fig. 3 entsprechende Darstellung des Konferenztisches nach Fig. 7 und

Fig. 9 eine Steuervorrichtung für die diversen Geräte in schematischer Darstellung.

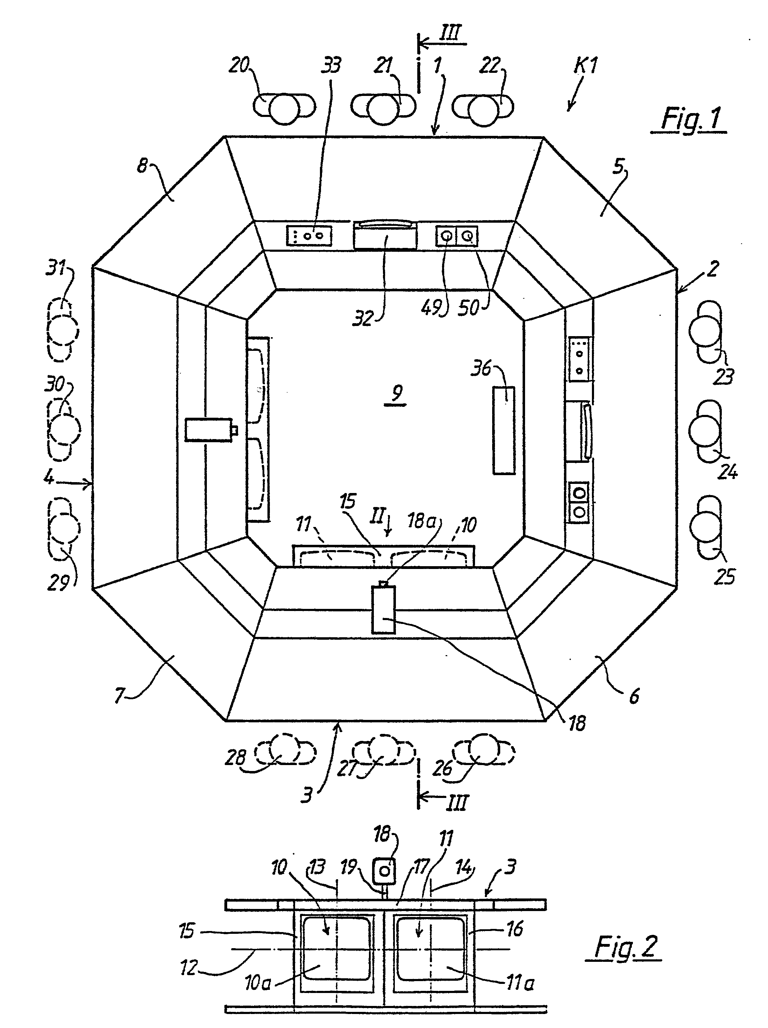

Der Konferenztisch $K_1$ nach den Fig. 1 bis 3 ist ringförmig ausgebildet. Der Ring ist durch vier Tischelemente 1 bis 4 und vier Füllelemente 5 bis 8 gebildet. Innerhalb der ringförmigen Anordnung aus Tischelementen und Füllelementen besteht ein Zwischenraum 9. Die Tischelemente 3, 4 sollen im folgenden als "Monitor-Tischelemente" bezeichnet werden, da an ihnen Bildschirmgeräte angeordnet sind.

An der Rückseite des Monitor-Tischelementes 3 sind zwei Elektronenstrahl-Bildschirmgeräte 10, 11 angeordnet. Jedes dieser Geräte ist um eine horizontale Achse 12 und um eine vertikale Achse 13 bzw. 14 schwenkbar, damit die Bildschirmgeräte in eine optimale Lage gebracht werden können. Jedes Bildschirmgerät ist von einer Zarge 15 bzw. 16 umgeben.

Über der Tischplatte 17 ist eine Fernsehkamera 18 angeordnet, die von einer Säule 19 getragen wird.

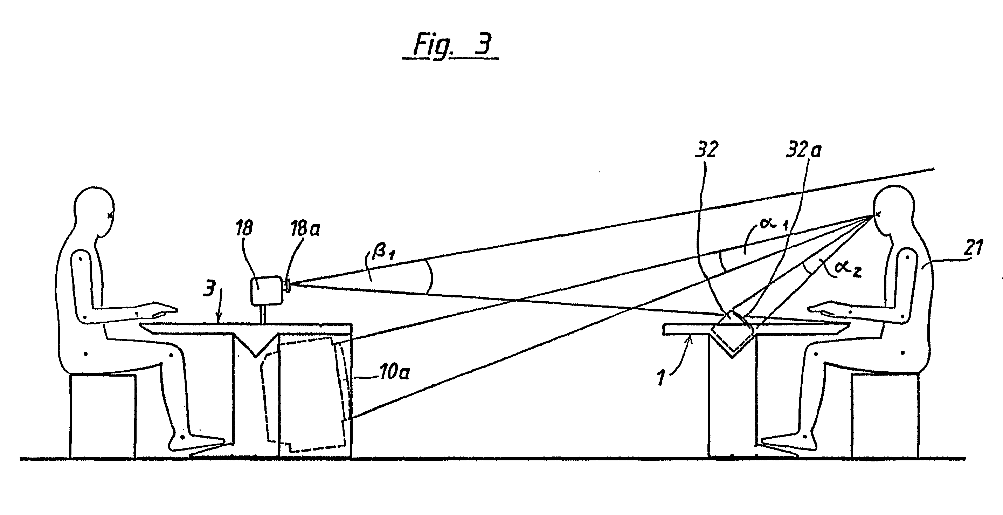

Das Objektiv 18a der Fernsehkamera 18 ist auf das gegenüberliegende Tischelement 1 gerichtet. Die Bildschirme 10a, 11a sind ebenfalls auf das gegenüberliegende Tischelement 1 gerichtet und so orientiert, nämlich etwas nach oben gewendet, daß die Bildschirme 10, 11 von Konferenzteilnehmern 20, 21, 22, die vor dem Tischelement 1 sitzen, bequem gesehen werden können. Andererseits kann die Fernsehkamera 18 die Konferenzteilnehmer 20, 21, 22 erfassen. Dies ist in Fig. 3 durch Einzeichnung der jeweiligen Blickwinkel dargestellt.

In der Seitenansicht gesehen ergibt sich für die Erfassung der gesamten Höhe der Bildschirme 10a, 11a ein notwendiger Blickwinkel $\alpha_1$. Die Anordnung der Tischelemente 1, 2 und deren Abmessungen sind so, daß der in bequemer- Haltung sitzende Konferenzteilnehmer 21 die Bildschirme 10a, 11a vollständig sehen kann. Der Blickwinkel der Fernsehkamera 18 muß in der Seitenansicht gesehen den Blickwinkel $\beta_1$ haben, um den Oberkörper des Konferenzteilnehmers 21 vollständig zu erfassen.

Im Tischelement 1 befindet sich auch ein Kontrollmonitor 32, der nahe bei den Konferenzteilnehmern 20, 21, 22 angeordnet ist. Insbesondere der in der Mitte sitzende Konferenzteilnehmer 21 kann rechtwinklig auf den Bildschirm 32a des Kontrollmonitors 32 blicken, wie dies wiederum aus Fig. 3 am besten zu ersehen ist. Der zum vollständigen Erfassen des Bildschirmes 32a notwendige Blickwinkel ist, in der Seitenansicht gesehen, $\alpha_2$.

Am Tischelement 21 befindet sich auch ein Steuerpult 33, mit dem der Konferenzteilnehmer 20 oder der Konferenzteilnehmer 21 die Einrichtungen des Konferenztisches steuern kann.

Am Tischelement 1 befindet sich außerdem eine akustische Kommunikationseinrichtung mit einem Mikrofon und einem Lautsprecher 50. Anstelle eines Lautsprechers können natürlich auch Kopfhörer vorgesehen werden.

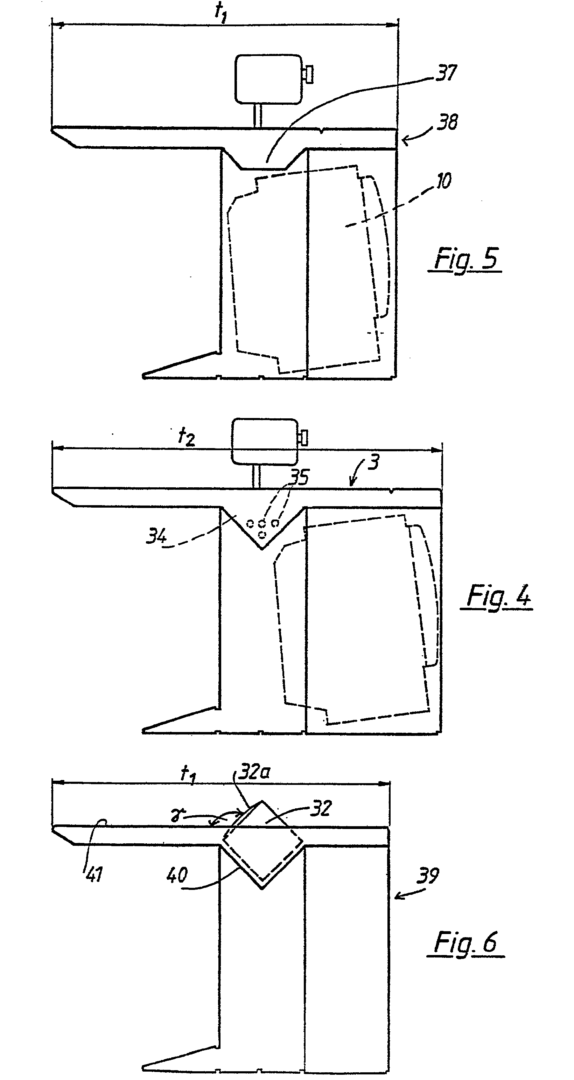

Aus der etwas größeren Seitenansicht nach Fig. 4 ist ersichtlich, daß die Tischelemente (es sei angenommen, daß Fig. 4 wieder das Tischelement 3 zeigt) einen Hohlraum 34 aufweisen, in dem Kabel 35 und eventuelle sonstige Installationen enthalten sind. Die Kabel 35 verbinden die diversen Bildschirmgeräte und Kameras mit den Steuerpulten 33. Durch diese Unterbringung von Kabeln und sonstigen Installationen direkt im Konferenztisch vermeidet man offenliegende Kabel und sonstige Installationseinrichtungen, deren Offenliegen den Gebrauch des Konferenztisches und sein Aussehen beeinträchtigen könnten.

Die Beschaffenheit des Konferenztisches wurde am Beispiel der Tischelemente 1 und 3 erläutert. Das Tischelement 1 ist gleich ausgebildet wie das Tischelement 2 und das Tischelement 3 ist gleich ausgebildet wie das Tischelement 4. Die relative Lage zwischen den Tischelementen 2, 4 ist gleich wie zwischen den Tischelementen 1, 2. Bei der Anordnung nach Fig. 1 können an einer Video-Konferenz sechs Konferenzteilnehmer 20 bis 25 direkt teilnehmen, d.h. sie können an einem entfernten Ort, wo sich andere Teilnehmer an der Video-Konferenz befinden, gesehen werden. Für die Konferenzteilnehmer 26 bis 31 ist eine indirekte Teilnahme möglich. Diese können zwar weder auf Bildschirmgeräten die entfernt befindlichen Konferenzteilnehmer sehen, noch werden sie von Fernsehkameras aufgenommen. Sie können jedoch beobachtend an der Konferenz teilnehmen oder auch aktiv eingreifen.

Der Konferenztisch ist auch für gewöhnliche Konferenzen brauchbar. In diesem Fall sind die Kameras 18 entweder vom Tisch entfernt oder in den Tisch versenkt, so daß sie den Blickkontakt mit gegenübersitzenden Konferenzteilnehmern nicht beeinträchtigen. Auch bei solchen Konferenzen können die Bildschirmgeräte 10, 11 benutzt werden, z.B. zur Sichtbarmachung von Daten, die im Zusammenhang mit dem Gegenstand der Konferenz stehen. Um auf den Bildschirmgeräten 10, 11 auch Darstellungen, die nicht elektronisch aufgezeichnet sind, wie z.B. Diapositive, sichtbar zu machen, ist ein Bildabtastgerät 36 vorgesehen, mit dem Bilder elektronisch abgetastet und dann auf den Bildschirmgeräten 10, 11 sichtbar gemacht werden können.

Fig. 5 zeigt eine Tischelement-Variante 38 mit einer Tiefe $t_1$ des Tischelementes, die geringer ist als die Tiefe $t_2$ des Tischelementes nach Fig. 4. In diesem Fall ist das Bildschirmgerät 10 weiter in Richtung der Tischkante gerückt, an der die Konferenzteilnehmer sitzen. Um dies zu ermöglichen, ist der Hohlraum 37 flacher ausgebildet als bei der Ausführungsform nach Fig. 4.

Das Tischelement 39 nach Fig. 6 hat wieder die geringere Tiefe $t_1$, die auch das Tischelement 38 aufweist. Ein Hohlraum 40 hat die gleiche Querschnittsform wie der Hohlraum 34 bei dem Tischelement 3 nach Fig. 4. In dem Hohlraum 40 ist ein Kontrollmonitor 32 teilweise aufgenommen. Sein Bildschirm 32a ist derart schräg nach oben gewendet, daß der Bildschirm 32a mit der Tischplatten-Oberfläche 41 einen Winkel γ von 135° einschließt.

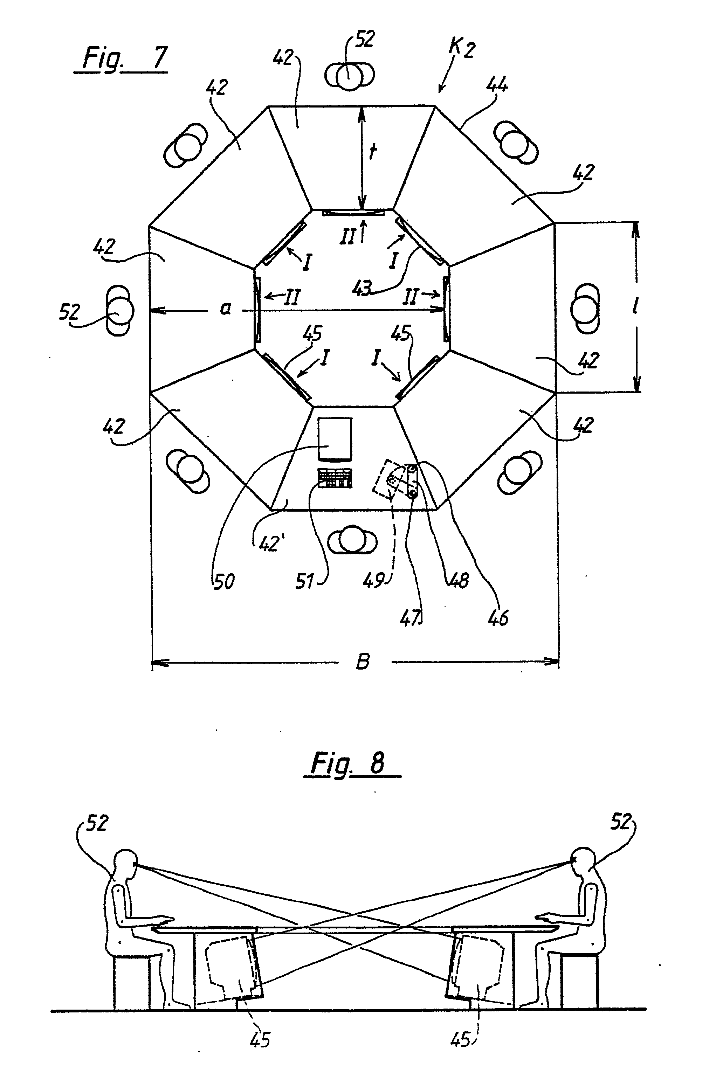

Der Konferenztisch $K_2$ nach den Fig. 7 und 8 hat die Form eines regelmäßigen Achteckes, das aus Tischelementen 42 und 42' zusammengesetzt ist. Jedes Tischelement hat eine trapezförmige Tischplatte mit einer Innenseite 43 und einer Außenseite 44. An jedem Tischelement 42 befindet sich ein Bildschirmgerät 45, dessen Anordnung innerhalb des Tischelementes aus Fig. 8 ersichtlich ist. Am Tischelement 42' hingegen ist ein Bildschirmgerät nicht vorgesehen, da der Raum unterhalb dieses Tisches von anderen Geräten in Anspruch genommen ist.

Auf dem Tischelement 42', das als Steuer-Tischelement bezeichnet werden soll, befindet sich eine Lesekamera 46, die an einem Stativ 47 über einen Arm 48 befestigt ist. Das Stativ 47 kann mittels einer in der Zeichnung nicht dargestellten Vorrichtung mit Elektromotor gehoben und gesenkt werden, wodurch der Abstand der Lesekamera von der Tischplatte des Tischelementes 42' verändert werden kann. Das Stativ 47 ist auch schwenkbar. Eine Schwenklage ist mit ausgezogenen Linien und eine mit gestrichelten Linien dargestellt. Dadurch ist eine bequeme Ausrichtung der Lesekamera auf eine abzubildende Vorlage 49 möglich.

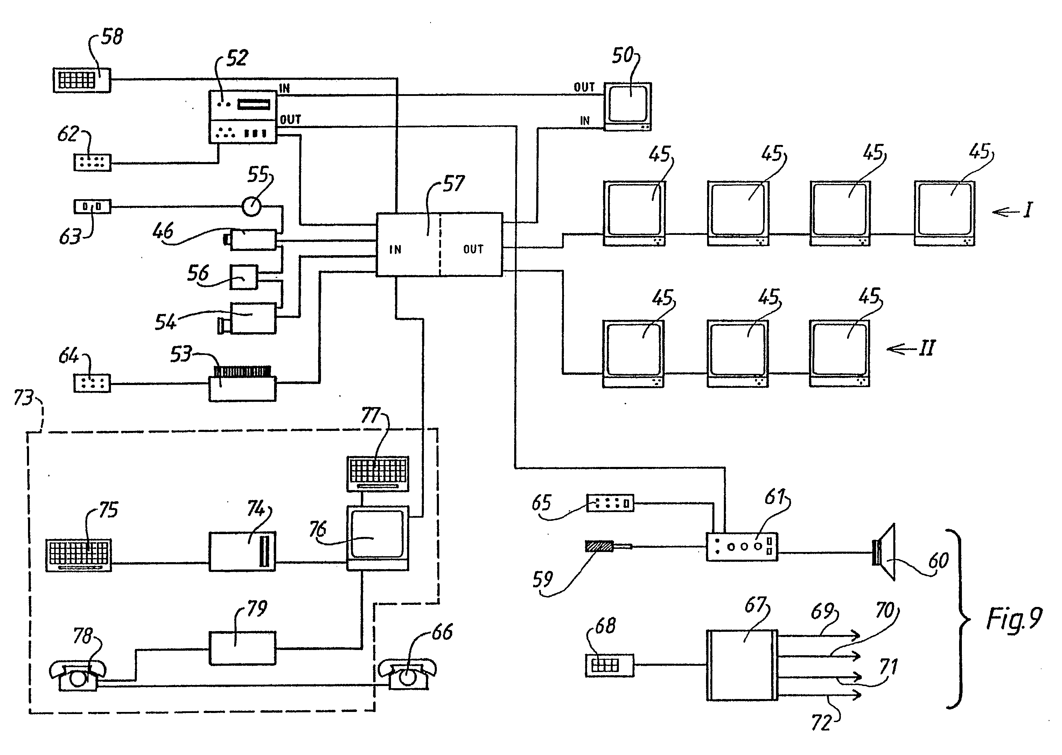

Am Tischelement 42' befindet sich auch ein Kontrollmonitor 50, der ähnlich gelagert sein kann, wie weiter oben anhand von Fig. 6 bereits erläutert. Ferner befindet sich am Steuer-Tischelement eine Schalttafel 51 zur Bedienung der Installationen des Konferenztisches, was anhand von Fig. 9 noch näher erläutert wird.

Der Konferenztisch $K_2$ ist besonders gut für interne Konferenzen geeignet. Fig. 8 demonstriert, daß jeder Konferenzteilnehmer 52 bequem auf ein Bildschirmgerät 45 blicken kann. Lediglich der Konferenzteilnehmer 52, der an demjenigen Tischelement 42 sitzt, das dem Steuer-Tischelement 42' gegenüberliegt, muß sich damit begnügen, das Bild in einem derjenigen Bildschirmgeräte 45 zu betrachten, die sich in den Tischelementen 42 befinden, die beiderseits des Steuer-Tischelementes 42' angeordnet sind. Wenn es der zur Verfügung stehende Raum im Steuer-Tischelement 42' zuläßt, kann selbstverständlich auch dort ein Bildschirmgerät angeordnet sein. Dies ist z.B. dann der Fall, wenn Zusatzgeräte wie ein Bildabtaster oder ein Videorekorder nicht innerhalb des Tischelementes 42' angeordnet sind.

In Fig. 7 ist dargestellt, daß an jedem Tischelement 42, 42' ein Konferenzteilnehmer 52 sitzt. In diesem Fall können acht Konferenzteilnehmer an der Konferenz teilnehmen. Es können jedoch auch an jedem Tischelement zwei Konferenzteilnehmer Platz finden, so daß insgesamt sechzehn Konferenzteilnehmer möglich sind. Dies ist z.B. möglich, wenn die Breite B des regelmäßigen Achteckes im Bereich von ca. 3,55 m bis 4,25 m liegt, z.B. 3,90 m beträgt. In diesem Fall ergibt sich auch ein günstiger Abstand a von einer äußeren Tischkante bis zum gegenüberliegenden Bildschirm 45 von ca. 2,55 m bis ca. 3,25 m, vorzugsweise von ca. 2,90 m. Daraus ergibt sich eine Länge l einer Tischelement-außenseite 44 von ca. 1,60 m. Als Tiefe t einer Tischplatte ist besonders gut geeignet ein Maß von ca. 1 m.

Fig. 9 zeigt in einer schematischen Darstellung, welche Installationen im Konferenztisch angeordnet sein können. Es sei angenommen, daß es sich um die Installation des Konferenztisches $K_2$ nach den Fig. 7 und 8 handelt.

Im Steuer-Tischelement 42' sind ein Videorekorder, ein Bildabtastgerät 53, die bereits erwähnte Lesekamera 46 und eine Fernsehkamera 54 angeordnet. Der Kreis 55 symbolisiert den Antriebsmotor und zugeordneten Antrieb für das Heben und Senken des Stativs 47. Die Versorgung der Geräte mit Netzstrom ist ebenfalls symbolisch dargestellt, wobei der Kasten 56 das Stromnetz andeutet.

Die diversen Geräte sind an die Eingangsseite eines Verteilers 57 angeordnet, der mittels Steuertasten 58 beeinflußt werden kann. An die Ausgangsseite (OUT) sind der Kontrollmonitor 50 und die Bildschirmgeräte 45 angeschlossen. Vier Bildschirmgeräte 45 sind zu einer Gruppe I und drei Bildschirmgeräte 45 zu einer Gruppe II zusammengeschlossen. Welches Bildschirmgerät der Gruppe I und welches der Gruppe II angehört, ist in Fig. 7 angegeben. Die Aufteilung der Bildschirmgeräte in Gruppen gestattet es, auf nebeneinanderliegenden Bildschirmgeräten verschiedene Bilder erscheinen zu lassen. Gegenübersitzende Konferenzteilnehmer sind in der Lage, wahlweise das eine oder das andere Bild zu betrachten.

Zur Installation des Konferenztisches gehört auch mindestens ein Mikrofon 59, ein Lautsprecher 60 und ein Tonverstärker 61. Bedienungstastaturen für die diversen installierten Elemente sind in Fig. 9 ebenfalls eingezeichnet und für den Videorekorder 52 mit 62, für das Stativ mit 63, für das Bildabtastgerät mit 64 und für die Tonanlage mit 65 bezeichnet. Alle diese Bedienungstastaturen sind in der Schalttafel 51 (siehe Fig. 7) zusammengefaßt.

Am Tisch befindet sich auch ein Telefon 66, sowie eine Schalteinheit 67 mit zugeordneter Bedienungstastatur 68 für die Steuerung von Raumeinrichtungen des Raumes, in dem sich der Konferenztisch befindet. Zum Beispiel symbolisiert der Pfeil 69 die Steuerung der Beleuchtung, der Pfeil 70 die Steuerung der Verdunkelung, der Pfeil 71 die Steuerung der Lüftung und der Pfeil 72 die Steuerung einer weiteren beliebigen Funktion. Auch die Bedienungstastatur 68 kann in die Schalttafel 51 integriert sein.

Innerhalb des mit gestrichelten Linien gezeichneten Kastens 73 sind Einrichtungen dargestellt, die nicht direkt in den Konferenztisch integriert sind, sondern die beispielsweise in einem Vorraum untergebracht sind. Dargestellt ist ein Mikrocomputer 74 mit zugeordneter Bedienungstastatur 75, ein Monitor 76 für über Postleitungen empfangbare Informationen (sogenannter Btx-Monitor) mit zugeordneter Tastatur 77 und ein Btx-Telefon 78, das über ein Postmodem 79 mit der Anlage kommuniziert. Es ist möglich, durch das am Konferenztisch befindliche Telefon 66 die im Kasten 73 befindlichen Geräte über den Verteiler 57 an die Bildschirme 45 anzuschließen.

**Patentansprüche**

1. Konferenztisch (K₁; K₂) mit mindestens zwei einander gegenüberliegenden Tischelementen (1, 2, 3, 4; 42, 42′), die durch einen Zwischenraum (9) getrennt sind, wobei jedes Tischelement (1, 2, 3, 4; 42, 42′) eine den Zwischenraum (9) begrenzende Innenseite (43) und eine der Innenseite (43) gegenüberliegende Außenseite (44) aufweist, an der sich mindestens ein Arbeitsplatz für einen Konferenzteilnehmer (20 bis 31; 52) mit einem unterhalb der Tischebene angeordneten Bildschirmgerät (10, 11; 45) befindet, dadurch gekennzeichnet, daß sich das Bildschirmgerät (10, 11; 45) an der Innenseite (43) des Tischelementes (1, 2, 3, 4; 42) befindet und sein Bildschirm (10a, 11a) im Blickbereich desjenigen Konferenzteilnehmers liegt, der seinen Arbeitsplatz am gegenüberliegenden Tischelement hat.

2. Konferenztisch nach Anspruch 1, dadurch gekennzeichnet, daß an der Innenseite jedes Tischelementes (42), eventuell mit Ausnahme eines Steuer-Tischelementes (42′), mindestens ein Bildschirmgerät (45) angeordnet ist, so daß von jedem Arbeitsplatz aus ein Bildschirmgerät (45) sichtbar ist, wobei eventuell am Steuer-Tischelement (42′) ein Kontrollmonitor (50) vorgesehen ist.

3. Konferenztisch nach einem der vorhergehenden Ansprüche, dadurch gekennzeichnet, daß er insgesamt ringförmig ausgebildet ist.

4. Konferenztisch nach Anspruch 3, dadurch gekennzeichnet, daß er aus acht trapezförmigen Tischelementen (42, 42′) zusammengesetzt ist, die ein regelmäßiges Achteck bilden (Fig. 7).

5. Konferenztisch nach Anspruch 3, dadurch gekennzeichnet, daß er (K₁) vier Tischelemente (1, 2, 3, 4) aufweist, die rechtwinklig zueinander stehen.

6. Konferenztisch nach Anspruch 5, dadurch gekennzeichnet, daß die Tischelemente (1, 2, 3, 4) trapezförmige Tischplatten (17) aufweisen und zwischen den Tischelementen (1, 2, 3, 4) Füllelemente (5, 6, 7, 8) mit trapezförmigen Tischplatten angeordnet sind (Fig. 1).

7. Konferenztisch nach einem der Ansprüche 5 und 6, dadurch gekennzeichnet, daß an einem Tischelement (1, 2, 3, 4) drei Arbeitsplätze für Konferenzteilnehmer (20 bis 31) angeordnet sind und daß an der Rückseite des gegenüberliegenden Tischelementes (3, 4) nebeneinander zwei Bildschirmgeräte (10, 11) angeordnet sind.

8. Konferenztisch nach einem der Ansprüche 5 bis 7, dadurch gekennzeichnet, daß an zwei rechtwinklig zueinander stehenden Tischelementen (3, 4) Bildschirmgeräte (10, 11) angeordnet sind.

9. Konferenztisch nach einem der vorhergehenden Ansprüche, dadurch gekennzeichnet, daß der Abstand (a) von der Außenseite eines Tischelementes (42) bis zu dem Bildschirm des Bildschirmgerätes (45) am gegenüberliegenden Tischelement (42) im Bereich von 2 m bis 5 m, vorzugsweise im Bereich von 2,55 m bis 3,25 m liegt, vorzugsweise ca. 2,90 m beträgt.

10. Konferenztisch nach einem der Ansprüche 1 bis 6 und 8, 9, dadurch gekennzeichnet, daß jedes Tischelement (42) zwei Arbeitsplätze aufweist.

11. Konferenztisch nach Anspruch 10, dadurch gekennzeichnet, daß die Außenseite (44) jedes Tischelementes eine Länge (1) im Bereich von 0,8 m bis 2,4 m, vorzugsweise 1,4 m bis 1,7 m, vorzugsweise von ca. 1,6 m aufweist und daß vorzugsweise die Tiefe (t) jedes Tischelementes (42) im Bereich von 0,6 m bis 1,5 m, vorzugsweise von ca. 0,8 m bis 1,2 m liegt, vorzugsweise ca. 1 m ist.

12. Konferenztisch nach einem der vorhergehenden Ansprüche, dadurch gekennzeichnet, daß das Bildschirmgerät (10, 11) mindestens teilweise unterhalb der Tischplatte (17) des zugeordneten Tischelementes (3, 4) liegt.

13. Konferenztisch nach einem der vorhergehenden Ansprüche, dadurch gekennzeichnet, daß das Bildschirmgerät (10, 11) von einer Zarge (15, 16) umgeben ist.

14. Konferenztisch nach einem der vorhergehenden Ansprüche, dadurch gekennzeichnet, daß die Neigungslage der Bildschirme (10a, 11a) der Bildschirmgeräte (10, 11) einstellbar ist, wobei die Geräte (10, 11) vorzugsweise um eine horizontale, zum Bildschirm (10a, 11a) parallele Achse (12) und um eine senkrechte Achse (10) schwenkbar sind.

15. Konferenztisch nach einem der vorhergehenden Ansprüche, dadurch gekennzeichnet, daß die Bildschirmgeräte (10, 11, 32, 48) Elektronenstrahl-Bildschirmgeräte sind.

16. Konferenztisch nach einem der vorhergehenden Ansprüche, gekennzeichnet durch mindestens eine Lesekamera (46), die auf die Tischfläche eines Tischelementes (42') gerichtet ist.

17. Konferenztisch nach Anspruch 16, dadurch gekennzeichnet, daß die Lesekamera (46) an einem heb- und senkbaren Stativ (47) gehalten ist, wobei vorzugsweise ein Antriebsmotor (55) zum Heben und Senken vorgesehen ist.

18. Konferenztisch nach einem der Ansprüche 16 und 17, dadurch gekennzeichnet, daß die Lesekamera (47) derart um eine vertikale Achse, vorzugsweise um die Achse des Statives (47), schwenkbar ist, daß ihr Objektiv einen Kreisbogen beschreibt.

19. Konferenztisch nach einem der vorhergehenden Ansprüche, dadurch gekennzeichnet, daß alle Installationen (35), die für den Betrieb der Bildschirmgeräte (10, 11; 32; 45), Kameras (18), Mikrofone (59) und Lautsprecher (60) nötig sind, im Konferenztisch (K₁, K₂) untergebracht sind.

20. Konferenztisch nach einem der vorhergehenden Ansprüche, gekennzeichnet durch ein Steuerpult (33; 51) zur Steuerung der Bildschirmgeräte (10, 11, 32; 45), Kameras (18; 46), Mikrofone (59) und Lautsprecher (60).

21. Konferenztisch nach einem der vorhergehenden Ansprüche, gekennzeichnet durch einen Bildabtaster (36; 53) zur Übertragung von Bildern auf die Bildschirmgeräte (10, 11; 45) und/oder die Kontrollmonitore (32; 50).

22. Konferenztisch nach einem der vorhergehenden Ansprüche, gekennzeichnet durch eine Steuereinrichtung mit einem Verteiler (57), an dessen Eingangsseite ein Videorekorder (52) und/oder eine Lesekamera (46) und/oder eine sonstige Fernsehkamera (54) und/oder ein Bildabtaster (53) und/oder eine Btx-Leitung und/oder ein Mikrocomputer (74) angeschlossen sind und an dessen Ausgangsseite die Bildschirmgeräte (45) angeschlossen sind.

23. Konferenztisch nach Anspruch 22, dadurch gekennzeichnet, daß die Bildschirmgeräte (45) in zwei Gruppen (I, II) aufgeteilt sind, die je für sich an den Verteiler (57) angeschlossen sind, wobei vorzugsweise benachbarte Bildschirmgeräte (45) verschiedenen Gruppen (I, II) angehören.

24. Konferenztisch nach einem der Ansprüche 22 und 23, dadurch gekennzeichnet, daß der Verteiler (57), der Videorekorder (52) und/oder die Lesekamera (46) und/oder die sonstige Fernsehkamera (54) und/oder der Bildabtaster (53) im Tisch (K₂) untergebracht sind, vorzugsweise in einem Steuer-Tischelement (42'), an dem sich auch das Steuerpult (51) befindet.

25. Konferenztisch nach einem der vorhergehenden Ansprüche, gekennzeichnet durch mindestens eine Fernsehkamera (18; 54), die auf den Konferenzteilnehmer (20, 21, 22, 23, 24, 25; 52) gerichtet ist sowie eine akustische Kommunikationseinrichtung mit mindestens einem Mikrofon (59) und einem Lautsprecher (60).

26. Konferenztisch nach Anspruch 25, dadurch gekennzeichnet, daß die Fernsehkamera (18; 54) über der Tischplatte (17; 42') angeordnet und von der Tischplatte abnehmbar oder unter die Tischplatte versenkbar ist.

27. Konferenztisch nach einem der vorhergehenden Ansprüche, gekennzeichnet durch mindestens einen Kontrollmonitor (32; 50) im Blickfeld des Konferenzteilnehmers (20, 21, 22, 23, 24, 25; 52).

28. Konferenztisch nach Anspruch 27, dadurch gekennzeichnet, daß der Kontrollmonitor (32; 50) näher beim Konferenzteilnehmer (20, 21, 22, 23, 24, 25; 52) angeordnet ist als das Bildschirmgerät (10, 11; 45), vorzugsweise unmittelbar am Arbeitsplatz des Konferenzteilnehmers.

29. Konferenztisch nach Anspruch 28, dadurch gekennzeichnet, daß der Kontrollmonitor (32; 50) einen nach oben gerichteten Bildschirm (32a) aufweist, dessen Ebene mit der Tischebene (41) einen Winkel (γ) im Bereich von 120° bis 150°, vorzugsweise von ca. 135°, einschließt.

30. Konferenztisch nach einem der Ansprüche 28 und 29, dadurch gekennzeichnet, daß der Kontrollmonitor (32; 50) mindestens teilweise unterhalb der Oberfläche der Tischplatte (17; 42') liegt.

## Claims

1. Conference table (K₁; K₂) having at least two table elements (1, 2, 3, 4; 42, 42') opposite one another and separated by an intermediate space (9), each table element (1, 2, 3, 4; 42, 42') having an inner side (43) delimiting the intermediate space (9) and an outer side (44) opposite the inner side (43), at which outer side (44) there is located at least one workplace for a conference participant (20 to 31; 52) with a screen device (10, 11; 45) arranged below table level, characterised in that the screen device (10, 11; 45) is located on the inner side (43) of the table element (1, 2, 3, 4; 42) and its screen (10a, 11a) is in the field of vision of the conference participant whose workplace is at the table element opposite.

2. Conference table according to Claim 1, characterised in that there is arranged on the inner side of each table element (42), possibly with the exception of a control table element (42'), at least one screen device (45), so that a screen device (45) is visible from each workplace, a monitor (50) possibly being provided at the control table element (42').

3. Conference table according to one of the preceding claims, characterised in that it is constructed to form an overall ring shape.

4. Conference table according to Claim 3, characterised in that it is composed of eight trapezoidal table elements (42, 42') which form a regular octagon (Figure 7).

5. Conference table according to Claim 3, characterised in that it (K₁) has four table elements (1, 2, 3, 4) which stand at right angles to one another.

6. Conference table according to Claim 5, characterised in that the table elements (1, 2, 3, 4) have trapezoidal table tops (17) and there are arranged between the table elements (1, 2, 3, 4) filler elements (5, 6, 7, 8) having trapezoidal table tops (Figure 1).

7. Conference table according to one of Claims 5 and 6, characterised in that there are arranged at one table element (1, 2, 3, 4) three workplaces for conference participants (20 to 31), and in that at the rear of the table element opposite (3, 4) there are arranged two screen devices (10, 11) adjacent to one another.

8. Conference table according to one of Claims 5 to 7, characterised in that screen devices (10, 11) are arranged at two table elements (3, 4) standing at right angles to one another.

9. Conference table according to one of the preceding claims, characterised in that the distance (a) from the outer side of a table element (42) to the screen of the screen device (45) at the opposite table element (42) is in the range from 2 m to 5 m, preferably in the range from 2.55 m to 3.25 m, preferably approximately 2.90 m.

10. Conference table according to one of Claims 1 to 6 and 8, 9, characterised in that each table element (42) has two workplaces.

11. Conference table according to Claim 10, characterised in that the outer side (44) of each table element has a length (1) in the range from 0.8 m to 2.4 m, preferably 1.4 m to 1.7 m, preferably approximately 1.6 m, and in that preferably the depth (t) of each table element (42) is in the range from 0.6 m to 1.5 m, preferably from approximately 0.8 m to 1.2 m, preferably approximately 1 m.

12. Conference table according to one of the preceding claims, characterised in that the screen device (10, 11) lies at least partially below the table top (17) of the associated table element (3, 4).

13. Conference table according to one of the preceding claims, characterised in that the screen device (10, 11) is surrounded by a frame (15, 16).

14. Conference table according to one of the preceding claims, characterised in that the inclined position of the screens (10a, 11a) of the screen devices (10, 11) is adjustable, it being possible for the devices (10, 11) to be pivoted preferably about a horizontal axis (12) parallel to the screen (10a, 11a) and about a perpendicular axis (10).

15. Conference table according to one of the preceding claims, characterised in that the screen devices (10, 11, 32, 48) are electron-beam screen devices.

16. Conference table according to one of the preceding claims, characterised by at least one video camera (46) which is directed at the table surface of a table element (42').

17. Conference table according to Claim 16, characterised in that the video camera (46) is held on a stand (47) which can be raised and lowered, a drive motor (55) preferably being provided for raising and lowering.

18. Conference table according to one of Claims 16 and 17, characterised in that the video camera (47) can be pivoted about a vertical axis, preferably about the axis of the stand (47), in such a way that its lens describes an arc.

19. Conference table according to one of the preceding claims, characterised in that all the wiring (35) required for operating the screen devices (10, 11; 32; 45), cameras (18), microphones (59) and loudspeakers (60) are accommodated in the conference table (K₁, K₂).

20. Conference table according to one of the preceding claims, characterised by a control desk (33; 51) for controlling the screen devices (10, 11, 32; 45), cameras (18; 48), microphones (59) and loudspeakers (60).

21. Conference table according to one of the preceding claims, characterised by an image scannner (36; 53) for transmitting images to the screen devices (10, 11; 45) and/or the monitors (32; 50).

22. Conference table according to one of the preceding claims, characterised by a control apparatus having a distributing board (57), a video recorder (52) and/or a video camera (46) and/or another television camera (54) and/or an image scanner (53) and/or a "Btx" line and/or a microcomputer (74) being connected to the input side thereof and the screen devices (45) being connected to the output side thereof.

23. Conference table according to Claim 22, characterised in that the screen devices (45) are divided into two groups (I, II) which are each connected to the distributing board (57), adjacent screen devices (45) preferably belonging to different groups (I, II).

24. Conference table according to one of Claims 22 and 23, characterised in that the distributing board (57), the video recorder (52) and/or the video camera (46) and/or the other television camera (54) and/or the image scanner (53) are accommodated in the table (K₂), preferably in a control table element (42') at which the control desk (51) is also located.

25. Conference table according to one of the preceding claims, characterised by at least one television camera (18; 54) which is directed at the conference participant (20, 21, 22, 23, 24, 25; 52) and an acoustic communications apparatus having at least one microphone (59) and one loudspeaker (60).

26. Conference table according to Claim 25, characterised in that the television camera (18; 54) is arranged above the table top (17; 42') and can be removed from the table top or lowered below the table top.

27. Conference table according to one of the preceding claims, characterised by at least one monitor (32; 50) in the field of vision of the conference participant (20, 21, 22, 23, 24, 25; 52).

28. Conference table according to Claim 27, characterised in that the monitor (32; 50) is arranged closer to the conference participant (20, 21, 22, 23, 24, 25; 52) than the screen device (10, 11; 45), preferably directly at the workplace of the conference participant.

29. Conference table according to Claim 28, characterised in that the monitor (32; 50) has a screen (32a) directed upwards, the plane of which is at an angle (γ) to the plane (41) of the table in the range from 120° to 150°, preferably of approximately 135°.

30. Conference table according to one of Claims 28 and 29, characterised in that the monitor (32; 50) lies at least partially below the surface of the table top (17; 42').

**Revendications**

1. Table de conférence (K₁; K₂) comprenant au moins deux éléments de table mutuellement en regard (1, 2, 3, 4; 42, 42') et séparés par un espace intermédiaire (9), chaque élément de table (1, 2, 3, 4; 42, 42') comportant un côté intérieur (43) limitant l'espace intermédiaire (9) et, à l'opposé du côté intérieur (43), un côté extérieur (44) sur lequel il se trouve au moins une place de travail pour un participant à la conférence (20 à 31; 52), avec un appareil à écran (10, 11; 45) disposé en dessous du plan de la table, caractérisée en ce que l'appareil à écran (10, 11; 45) se trouve sur le côté intérieur (43) de l'élément de table (1, 2, 3, 4; 42) et en ce que son écran (10a, 11a) se trouve dans le champ de vision du participant à la conférence qui a sa place de travail sur l'élément de table situé en regard.

2. Table de conférence selon la revendication 1, caractérisée en ce que au moins un appareil à écran (45) est disposé sur le côté intérieur de chaque élément de table (42), éventuellement à l'exception d'un élément de table de commande (42'), de sorte qu'un appareil à écran (45) est visible à partir de chaque place de travail, un moniteur de contrôle (50) étant situé éventuellement sur l'élément de table de commande (42').

3. Table de conférence selon l'une des revendications précédentes, caractérisée en ce que dans l'ensemble elle a une forme annulaire.

4. Table de conférence selon la revendication 3, caractérisée en ce qu'elle est composée de huit éléments de tables trapézoïdaux (42, 42') qui forment un octagone régulier (Fig. 7).

5. Table de conférence selon la revendication 3, caractérisée en ce qu'elle (K₁) est composée de quatre éléments de table (1, 2, 3, 4) qui sont placés mutuellement à angle droit.

6. Table de conférence selon la revendication 5, caractérisée en ce que les éléments de table (1, 2, 3, 4) comportant des plateaux de table trapézoïdaux (17) et en ce que des éléments de remplissage (5, 6, 7, 8) avec des plateaux de table trapézoïdaux sont disposés entre les éléments de table (1, 2, 3, 4) (Fig. 1).

7. Table de conférence selon l'une des revendications 5 et 6, caractérisée en ce que trois places de travail pour des participants à la conférence (20 à 31) sont disposées sur un élément de table (1, 2, 3, 4) et en ce que deux appareils à écran (10, 11) adjacents sont disposés à l'arrière de l'élément de table en regard (3, 4).

8. Table de conférence selon l'une des revendications 5 à 7, caractérisée en ce que des appareils à écran (10, 11) sont disposés sur deux éléments de table (3, 4) disposés mutuellement à angle droit.

9. Table de conférence selon l'une des revendications précédentes, caractérisée en ce que la distance (a) depuis le côté extérieur d'un élément de table (42) jusqu'à l'écran de l'appareil correspondant (45) sur l'élément de table (42) situé en regard est comprise entre 2 et 5 m, ou de préférence entre 2,55 et 3,25 m, ou de préférence encore elle est de 2,90 m environ.

10. Table de conférence selon l'une des revendications 1 à 6 ou 8, 9, caractérisée en ce que chaque élément de table (42) comporte deux places de travail.

11. Table de conférence selon la revendication 10, caractérisée en ce que le côté extérieur de chaque élément de table a une longueur (1) comprise entre 0,8 et 2,4 m, ou de préférence entre 1,4 et 1,7 m ou, de préférence encore, elle est égale à 1,6 m et en ce que de préférence la profondeur (t) de chaque élément de table (42) est comprise entre 0,6 et 1,5 m, ou de préférence environ entre 0,8 et 1,2 m ou encore elle est de préférence égale à 1 m environ.

12. Table de conférence selon l'une des revendications précédentes, caractérisée en ce que l'appareil à écran (10, 11) se trouve, au moins en partie, en dessous du plateau de table (17) de l'élément de table correspondant (3, 4).

13. Table de conférence selon l'une des revendications précédentes, caractérisée en ce que l'appareil à écran (10, 11) est entouré par un cadre (15, 16).

14. Table de conférence selon l'une des revendications précédentes, caractérisée en ce que l'inclinaison des écrans (10a, 11a) des appareils à écran (10, 11) est réglable, les appareils (10, 11) pouvant pivoter de préférence autour d'un axe (12) horizontal et parallèle à l'écran (10a, 11a) et autour d'un axe vertical (10).

15. Table de conférence selon l'une des revendications précédentes, caractérisée en ce que des appareils à écran (10, 11, 32, 48) sont des appareils à écran à faisceau électronique.

16. Table de conférence selon l'une des revendications précédentes, caractérisée par au moins une caméra de lecture (46) qui est dirigée vers le plateau d'un élément de table (42').

17. Table de conférence selon la revendication 16, caractérisée en ce que la caméra de lecture (46) est montée sur un pied support (47) pouvant être levé et abaissé, un moteur d'entraînement (55) étant de préférence prévu à cet effet.

18. Table de conférence selon l'une des revendications 16 et 17, caractérisée en ce que la caméra de lecture peut pivoter autour d'un axe vertical, et de préférence autour de l'axe du pied support (47), de façon que son objectif décrive un arc de cercle.

19. Table de conférence selon l'une des revendications précédentes, caractérisée en ce que tous les dispositifs (55), qui sont nécessaires au fonctionnement des appareils à écran (10, 11; 32; 45), les caméras (18), les microphones (59) et les haut-parleurs (60), sont logés sous la table de conférence (K₁, K₂).

20. Table de conférence selon l'une des revendications précédentes, caractérisée par un pupitre de commande (33; 51) pour commander les appareils à écran (10, 11, 32; 45), les caméras (13; 46), les microphones (59) et les haut-parleurs (60).

21. Table de conférence selon l'une des revendications précédentes, caractérisée par un capteur d'image (36; 53) pour transmettre des images aux appareils à écran (10, 11; 45) et/ou aux moniteurs de contrôle (32; 50).

22. Table de conférence selon l'une des revendications précédentes, caractérisée par un dispositif de commande avec un distributeur (57), à l'entrée duquel sont raccordés un enregistreur vidéo (52) et/ou une caméra de lecture (46) et/ou autre caméra de télévision (54) et/ou un capteur d'image (53) et/ou une canalisation Btx et/ou un micro-ordinateur (74), et à la sortie duquel sont raccordés les appareils à écran (45).

23. Table de conférence selon la revendication 22, caractérisée en ce que les appareils à écran (45) sont subdivisés en deux groupes (I, II) qui sont reliés chacun séparément au distributeur (57), les appareils à écran (45) qui sont voisins appartenant de préférence à des groupes différents (I, II).

24. Table de conférence selon l'une des revendications 22 et 23, caractérisée en ce que le distributeur (57), l'enregistreur vidéo (52) et/ou la caméra de lecture (46) et/ou l'autre caméra de télévision et/ou le capteur d'image (53) sont logés sous la table (K2) et de préférence dans un élément de table de commande (42') sur lequel se trouve également le pupitre de commande (51).

25. Table de conférence selon l'une des revendications précédentes, caractérisée par au moins une caméra de télévision (18; 54) qui est dirigée vers les participants à la conférence (20, 21, 22, 23, 24, 25; 52) ainsi que par un dispositif de communication acoustique comprenant au moins un microphone (59) et un haut-parleur (60).

26. Table de conférence selon la revendication 25, caractérisée en ce que la caméra de télévision (18; 54) est disposée en dessus du plateau de table (17; 42') et peut en être enlevée ou être escamotée sous le plateau de table.

27. Table de conférence selon l'une des revendications précédentes, caractérisée par au moins un moniteur de contrôle (32; 50) dans le champs de vision du participant à la conférence (20, 21, 22, 23, 24, 25; 52).

28. Table de conférence selon la revendication 27, caractérisée en ce que le moniteur de contrôle (32; 50) est disposé plus près du participant à la conférence (20, 21, 22, 23, 24, 25; 52) que l'appareil à écran (10, 11; 45), de préférence immédiatement à côté de la place de travail du participant à la conférence.

29. Table de conférence selon la revendication 28, caractérisée en ce que le moniteur de contrôle (32; 50) comporte un écran (32a) orienté vers le bas, et dont le plan fait un angle ($\gamma$) de 120° à 180°, de préférence 135° avec le plan de la table.

30. Table de conférence selon l'une des revendications 28 et 29, caractérisée en ce que le moniteur de contrôle (32; 50) se trouve au moins en partie sous la surface supérieure de la table (17, 42').

*Fig.1*

*Fig.2*

Fig. 3

EP 0 218 963 B1

EP 0 218 963 B1

$t_1$

37

38

10

*Fig. 5*

$t_2$

35

3

34

*Fig. 4*

$t_1$

32a

32

α

40

39

41

*Fig. 6*

Fig. 7

Fig. 8

Fig.9